# EUROPÄISCHE PATENTSCHRIFT

(11) **EP 3 915 838 B1**
(45) Veröffentlichungstag und Bekanntmachung des Hinweises auf die Patenterteilung: **30.11.2022**
(21) Anmeldenummer: 21174968.4
(22) Anmeldetag: 20.05.2021
(51) Int. Cl.: B60R 1/00

(54) **FAHRERASSISTENZSYSTEM UND VERFAHREN ZUM ANKUPPELN EINES ANHÄNGERS AN EIN ZUGFAHRZEUG**
DRIVER ASSISTANCE SYSTEM AND METHOD FOR COUPLING A TRAILER ONTO A TRACTOR
SYSTÈME D'AIDE À LA CONDUITE ET PROCÉDÉ D'ACCOUPLEMENT D'UNE REMORQUE À UN VÉHICULE TRACTÉ

(30) Priorität: 26.05.2020 DE 102020003141
(43) Veröffentlichungstag der Anmeldung: 01.12.2021
(73) Patentinhaber: JOST-Werke Deutschland GmbH, 63263 Neu-Isenburg (DE)
(72) Erfinder: KAUFHOLD, Benjamin, 63303 Dreieich (DE); SAUPE, Swen, 55126 Mainz (DE)
(74) Vertreter: Fritzsche, Thomas

(56) Entgegenhaltungen:
- EP-A1- 2 683 164
- EP-A2- 3 275 704
- US-A1- 2019 283 803

## Beschreibung

Die Erfindung betrifft ein Fahrerassistenzsystem zum Ankuppeln eines Anhängers an ein Zugfahrzeug entsprechend den im Oberbegriff des Anspruchs 1 stehenden Merkmalen. Darüber hinaus ist die Erfindung auch an einem entsprechenden Verfahren verwirklicht.

Das Zugfahrzeug und der Anhänger bilden in gekuppeltem Zustand einen Gliederzug. Zum Ankuppeln des Anhängers fährt das Zugfahrzeug mit seiner Kupplung rückwärts an den stehenden Anhänger solange heran, bis eine an einer Deichsel des Anhängers ausgebildete Zugöse korrekt in ein Fangmaul der Kupplung eingefahren ist und darin mittels eines Kupplungsbolzens oder Verschlussbügels verriegelt wird. Besonders schwierig ist jedoch das Einschätzen der räumlichen Relativposition von Kupplung und Zugöse bei Gliederzügen mit Zentralachsanhängern, da bei den hierfür verwendeten Zugfahrzeugen die Kupplung sehr weit nach innen in Richtung der Fahrzeughinterachse des Zugfahrzeugs zurückversetzt ist.

Im Stand der Technik sind bereits Bemühungen unternommen worden, den Ankuppelvorgang eines Zugfahrzeugs und Anhängers durch ein Fahrerassistenzsystem für den Fahrer zu vereinfachen. Die DE 10 2014 012 330 A1 beschreibt ein derartiges System mit einer Videokamera, welche in einem Videobild die Kupplung und das rückwärtige Umfeld mit der Zugöse erfasst. Auf einem im Sichtbereich des Fahrers angeordneten Bildschirm ist eine Leitmarkierung als Peilhilfe eingeblendet, die eine horizontale Höhenhilfslinie und eine vertikale Leitlinie umfasst. Der Nachteil dieses bekannten Fahrerassistenzsystems liegt darin, dass dem Fahrer mit dem aus Höhenhilfslinie und Leitlinie gebildeten Zielkreuz für die Annäherung des Zugfahrzeugs lediglich eine zweidimensionale Darstellung ohne eine Abschätzung der räumlichen Tiefe zur Verfügung steht.

Die EP 1 377 062 B1 offenbart eine an einem Personenkraftwagen montierte Rücksicht-Kamera, die ein auf einem Bildschirm angezeigtes Bild aufnimmt. Der Bildschirm ist von einem Fahrersitz aus einsehbar und das Bild enthält ein Hilfslinienbild, das ausgehend von der Position der Anhängerkupplung die direkte Rückwärtsrichtung kennzeichnet. Eine Relativposition von Anhängerkupplung und des anhängerseitigen Kupplungs-Gegenstücks in der Fahrzeuglängsachse kann durch zusätzliche horizontale Linien erfasst sein, die quer zur Fahrzeuglängsachse ausgerichtet sind. Eine Abschätzung der Höhenlage zwischen Anhängerkupplung und Kupplungs-Gegenstück ist nicht vorgesehen und auch nicht relevant, da Personenkraftwagen regelmäßig nicht über eine höhensteuerbare Luftfederung verfügen.

In der US 2019/0283803 A1 ist ein System für die vereinfachte Annäherung eines Personenkraftwagens an einen Anhänger beschrieben. Das System weist eine im Innenraum des Personenkraftwagens angeordnete Anzeigevorrichtung auf, welche dem Fahrer ein Bild des hinter dem Personenkraftwagen befindlichen Verkehrsraumes bereitstellt. In dem Bild sind für eine zielgenaue seitliche Annäherung zwei Lenk-Führungslinien eingeblendet. Der Abstand zu dem Anhänger soll über mehrere in Querrichtung verlaufende Entfernungs-Führungslinien abgeschätzt werden. Eine Berücksichtigung der Höhenlage einer an dem Personenkraftwagen befestigten Kupplung zu dem Anhänger ist nicht vorgesehen.

Die EP 2 683 164 A1 offenbart ein Fahrerassistenzsystem gemäß dem Oberbegriff des Anspruchs 1 sowie ein Verfahren zum Ankuppeln eines Anhängers an ein Zugfahrzeug gemäß dem Oberbegriff des Anspruchs 11.

Der Erfindung lag daher die Aufgabe zugrunde, ein Fahrerassistenzsystem bereitzustellen, mit dessen Hilfe der Fahrer während einer rückwärtigen Annäherung an einen Anhänger eine Abschätzung der dreidimensionalen Lage der Zugöse zu dem Zugfahrzeug vornehmen kann.

Die Aufgabe wird erfindungsgemäß mit den Merkmalen der unabhängigen Ansprüche gelöst. Die Kupplung ist typischerweise eine Maulkupplung oder eine Hakenkupplung für Lastkraftwagen.

Nach Anspruch 1 ist die Videokamera vertikal beabstandet zu der Kupplung angeordnet, woraus eine räumliche Tiefe im Videobild resultiert. Der vertikale Abstand zur Kupplung kann prinzipiell über der Kupplung oder unter der Kupplung realisiert sein, wobei eine Anbringung der Videokamera über der Kupplung im Hinblick auf die Einbausituation am Zugfahrzeug bevorzugt ist. Eine unter der Kupplung angebrachte Videokamera befindet sich häufig in einer exponierten Lage und ist dadurch einem erhöhten Risiko für Beschädigungen ausgesetzt. Die Videokamera ist in der Fahrzeuglängsachse derart an der Kupplung angeordnet, dass die Kupplung außerhalb des Videobildes der Videokamera angeordnet ist. Typischerweise befindet sich die Kamera in einer Position in Richtung des Anhängers hinter der Kupplung. In dem Videobild sind demzufolge keine Komponenten der Kupplung sichtbar.

Die Strahlenkorridore sind als Overlay statisch zum Videobild der Videokamera angeordnet. Hierfür können die Strahlenkorridore fest auf einer Linse der Videokamera aufgebracht sein. Alternativ sind die Strahlenkorridore mit einer Bildverarbeitungssoftware der Videokamera im Videobild generiert oder als Overlay auf einen Bildsensor der Videokamera aufgebracht. In einer noch anderen Ausführungsform können die Strahlenkorridore über das Videobild der Anzeigevorrichtung gelegt sein.

Ausgehend von einer vorgegebenen Größe von Fangmaul und Zugöse sowie einer vorgegebenen Einbauposition und daraus resultierendem Neigungswinkel der Kamera wächst während der Annäherung des Zugfahrzeugs an den Anhänger die Größe der Zugöse im Videobild entsprechend dem Verlauf und der Größe der Strahlenkorridore. Die Strahlenkorridore sind insbesondere symmetrisch zur Fahrzeuglängsachse ausgerichtet. Die Zugöse kann ein genormtes und/oder stets konstantes Merkmal als Bezugselement aufweisen, welches während der Annäherung des Zugfahrzeugs an den Anhänger innerhalb des Strahlenkorridors gehalten ist beziehungsweise gehalten wird. Vorzugsweise ist das Bezugselement ein Außendurchmesser der Zugöse.

Aufgrund des räumlichen Verlaufs der Strahlenkorridore kann die Position der Zugöse des Anhängers sowohl hinsichtlich ihrer seitlichen Lage als auch bezüglich ihrer Höhenlage zu den Strahlenkorridoren abgeschätzt werden. Bei einer vertikalen Position der Videokamera über der Kupplung gilt: Je niedriger die Zugöse beziehungsweise ihr Bezugselement angeordnet ist, desto weiter entfernt ist der Abstand zur Videokamera und desto kleiner erscheint dieses relativ zu den Strahlenkorridoren. Je höher die Zugöse beziehungsweise ihr Bezugselement angeordnet ist, desto geringer ist der Abstand zur Videokamera und desto größer erscheint dieses relativ zu den Strahlenkorridoren. Aufgrund der zulaufenden Ausrichtung der Strahlenkorridore, wandert während der Annäherung des Zugfahrzeugs die Zugöse beziehungsweise ihr Bezugselement in der Fahrzeuglängsachse relativ zu den Strahlenkorridoren, so dass sich auch ein Abstand in der Fahrzeuglängsachse vom Fahrer abschätzen lässt.

Neben der räumlichen Abschätzung der Position der Zugöse beziehungsweise ihres Bezugselementes resultiert aus der vertikal versetzten Position der Videokamera zu der Kupplung noch ein Sicherheitsvorteil, da für eine Wartung oder Reinigung der Videokamera nicht in das Fangmaul der Kupplung hineingegriffen zu werden braucht. Dieses birgt insbesondere bei Maulkupplungen stets die Gefahr, dass sich ein federvorgespannter Kupplungsbolzen aus seiner Öffnungsstellung löst und in die Schließstellung vorschnellt, wodurch beispielsweise schwere Handverletzungen hervorgerufen werden können. Aufgrund des baulichen Abstandes der Videokamera zu der Kupplung unterliegt diese ohnehin einer geringeren Verschmutzung, da kein Schmierfett oder Abrieb des Fangmauls oder Kupplungsbolzens bis zu der Videokamera wandert und dort ablegt.

Die Strahlenkorridore weisen jeweils eine Innenbegrenzungslinie sowie eine Außenbegrenzungslinie auf und für ein korrektes Ankuppeln während einer Annäherung von Fangmaul und Zugöse ist ein Bezugselement der Zugöse im Videobild zwischen der Innenbegrenzungslinie und der Außenbegrenzungslinie beider Strahlenkorridore angeordnet. Durch die Strahlenkorridore ist die Relativlage der Zugöse sowohl in seitlicher Richtung als auch in der Fahrzeuglängsachse abschätzbar. Die Innenbegrenzungslinie und Außenbegrenzungslinie definieren die Breite des zugehörigen Strahlenkorridors, aus welcher sich besonders gut eine Höheninformation der Kupplung relativ zu der Zugöse ableiten lässt.

Für den Fall, dass die Zugöse, beispielsweise ihr Außendurchmesser, über die Innenbegrenzungslinie und die Außenbegrenzungslinie beider Strahlenkorridore seitlich hinausragt, befindet sich die ortsfest zur Videokamera angeordnete Kupplung in einer zu niedrigen Lage. Die statischen und stets gleich großen Strahlenkorridore der Videokamera sind relativ zu nah an der Zugöse, so dass diese im Videobild verhältnismäßig groß ist und die Innenbegrenzungs- und Außenbegrenzungslinien überragt.

Falls die Zugöse dagegen, beispielsweise ihr Außendurchmesser, innerhalb der Innenbegrenzungslinien beider Strahlenkorridore ausgerichtet ist, befindet sich die ortsfest zur Videokamera angeordnete Kupplung in einer zu hohen Lage. Die statischen und stets gleich großen Strahlenkorridore der Videokamera sind in vertikaler Richtung relativ zu weit beabstandet zu der Zugöse, so dass diese im Videobild verhältnismäßig klein ist und, insbesondere ihr Außendurchmesser, nicht einmal die Innenbegrenzungsbegrenzungslinien überragt.

Hieraus resultiert der Vorteil, dass der Außendurchmesser besonders gut im Videobild auch bei diffusen Lichtverhältnissen sichtbar ist. Es wäre auch möglich, als Bezugselement des Anhängers einen Innendurchmesser der Zugöse heranzuziehen, dessen Sichtkanten jedoch weniger gut zu erkennen sind. Zusätzliche Schmierstoffanhaftungen verfälschen im Videobild eine Abschätzung der Position des Innendurchmessers bezüglich der Strahlenkorridore zusätzlich. Grundsätzlich wäre es auch denkbar, ein abseits der Deichsel ortsfest angeordnetes Bezugselement zu bestimmen und die Strahlenkorridore darauf zu skalieren. Sofern dieses entfernt von der Deichsel befindliche Bezugselement mit einem Offset versehen ist, wäre ebenfalls ein korrektes Einfahren der Zugöse in die Kupplung möglich, solange das Bezugselement zwischen der Innenbegrenzungslinie und Außenbegrenzungslinie beider Strahlenkorridore gehalten wird.

Ein Abstand zwischen der Innenbegrenzungslinie und der Außenbegrenzungslinie eines Strahlenkorridors kann insbesondere abhängig von einem Toleranzspielraum des Fangmauls und/oder der Zugöse sein. Der Toleranzspielraum der Kupplung gibt an, unter welcher Fehlstellung der Kupplung zu der Zugöse noch ein korrektes Ankuppeln möglich ist. Je größer der Toleranzspielraum des Fangmauls ist, desto größer kann auch der Abstand zwischen der Innenbegrenzungslinie und der Außenbegrenzungslinie eines Strahlenkorridors sein.

Vorzugsweise ist der Abstand mit zunehmender Distanz geringer, das heißt jeder der Strahlenkorridore verjüngt sich mit zunehmender Distanz in der Fahrzeuglängsachse.

Zweckmäßigerweise ist die Videokamera in der Fahrzeuglängsachse angeordnet. Hieraus resultiert der Vorteil, dass die Videokamera mit der optimalen Ankuppelrichtung fluchtet und die statischen Strahlenkorridore symmetrisch zur Kupplung angeordnet sind, so dass auf eine Seitenkorrektur bei der Darstellung im Videobild verzichtet werden kann.

Es kann außerdem sinnvoll sein, wenn das Fangmaul einen konisch aufgeweiteten Wandabschnitt aufweist und die Videokamera über dem konisch aufgeweiteten Wandabschnitt angeordnet ist. Der aufgeweitete Wandabschnitt umgibt eine in axialer Richtung zur Aufnahme der Zugöse offene Einfahröffnung und dient dazu, Fehlstellungen der Kupplung zu der Zugöse in gewissen Grenzen zu tolerieren, indem die Zugöse von dem aufgeweiteten Wandabschnitt erfasst und bei weiterer Annäherung des Zugfahrzeugs über den aufgeweiteten Wandabschnitt in ihre Endlage rutscht. Mit dem aufgeweiteten Wandabschnitt schließt die Kupplung nach hinten ab. Eine über dem aufgeweiteten Wandabschnitt angeordnete Videokamera ist demzufolge zu keinem Zeitpunkt von Teilen der Kupplung überdeckt, sondern gewährt stets ein freies Sichtfeld in Richtung Anhänger und Zugöse.

Vorteilhafterweise umfasst die Kupplung einen Verbindungsflansch zur Montage an dem Zugfahrzeug und einen vertikal in dem Fangmaul gelagerten Kupplungsbolzen, wobei die Videokamera in der Fahrzeuglängsachse auf der zum Verbindungsflansch abgewandten Seite des Kupplungsbolzens angeordnet ist. In dieser Einbauposition ist die Kamera ebenfalls zwischen dem Kupplungsbolzen und der freien Seite des Fangmauls angeordnet, so dass der Kupplungsbolzen, welcher ebenfalls in der Fahrzeuglängsachse vorgesehen ist, nicht in das Sichtfeld der Videokamera gelangen kann.

Die Kupplung kann beispielsweise ein über dem Fangmaul angeordnetes Anfahrschutzblech aufweisen und die Videokamera hinter dem Anfahrschutzblech befestigt sein. Das Anfahrschutzblech schützt vorrangig die über dem Fangmaul angebrachten Komponenten der Kupplung, insbesondere die Verschlussmechanik, gegen Beschädigungen durch eine fehlausgerichtete Zugöse. In einer Einbaulage der Videokamera hinter dem Anfahrschutzblech ist auch die Kamera während des Ankuppelns gegen mechanische Beschädigungen geschützt.

Vorzugsweise ist das Anfahrschutzblech mit einem Durchbruch ausgebildet und die Videokamera fluchtend zu dem Durchbruch angeordnet. Heraus resultiert der Vorteil, dass die Kamera einerseits ein freies Sichtfeld nach hinten in Richtung des Anhängers hat und andererseits durch das Anfahrschutzblech geschützt ist. Der Durchbruch sollte derart bemessen und die Videokamera soweit zu dem Durchbruch beabstandet sein, dass der Außendurchmesser der Zugöse lediglich teilweise in den Durchbruch hineinreicht und keine Kontaktierung mit der Videokamera möglich ist.

Gemäß einer weiteren, besonderen Ausführungsform kann das Fahrerassistenzsystem automatisch oder auf Fahrerfreigabe in die Motorsteuerung und/oder Getriebesteuerung und/oder Bremssteuerung und/oder Höhensteuerung der Luftfederung Einfluss nehmen. Hierbei handelt es sich um ein autark arbeitendes Assistenzsystem, welches ohne Mitwirken des Fahrers ein Annähern und Ankuppeln des Anhängers durchführt.

Nach dem erfindungsgemäßen Verfahren ist die Videokamera vertikal beabstandet zu der Kupplung angeordnet und die Leitmarkierung wird mittels zweier symmetrisch zur Fahrzeuglängsachse angeordneten und in rückwärtiger Richtung des Zugfahrzeugs zulaufenden Strahlenkorridoren visualisiert.

Die Strahlenkorridore weisen jeweils eine Innenbegrenzungslinie sowie eine Außenbegrenzungslinie auf und während einer Annäherung von Fangmaul und Zugöse korrekt angekuppelt wird, wenn ein Bezugselement der Zugöse im Videobild zwischen der Innenbegrenzungslinie und der Außenbegrenzungslinie beider Strahlenkorridore angeordnet wird.

Zweckmäßigerweise wird durch eine im Videobild über beide Außenbegrenzungslinien hinausragende Zugöse visualisiert, das Zugfahrzeug mittels seiner Luftfederung anzuheben.

Dagegen kann durch eine im Videobild innerhalb beider Innenbegrenzungslinien angeordneten Zugöse visualisiert werden, das Zugfahrzeug mittels seiner Luftfederung abzusenken.

Zum besseren Verständnis wird die Erfindung nachfolgend anhand von sieben Figuren näher erläutert. Es zeigen die
- **Fig. 1:**: eine Seitenansicht auf eine Maulkupplung mit Videokamera in korrekter Ausrichtung vor einer Zugöse unmittelbar vor dem Ankuppeln;
- **Fig. 2:**: ein Videobild mit Strahlenkorridoren und Zugöse entsprechend der Situation in Fig. 1;
- **Fig. 3:**: eine Seitenansicht auf eine zu niedrig ausgerichtete Maulkupplung mit Videokamera vor einer Zugöse unmittelbar vor dem Ankuppeln;
- **Fig. 4:**: ein Videobild mit Strahlenkorridoren und Zugöse entsprechend der Situation in Fig. 3;
- **Fig. 5:**: eine Seitenansicht auf eine zu hoch ausgerichtete Maulkupplung mit Videokamera vor einer Zugöse unmittelbar vor dem Ankuppeln;
- **Fig. 6:**: ein Videobild mit Strahlenkorridoren und Zugöse entsprechend der Situation in Fig. 5 und
- **Fig. 7:**: eine Vorderansicht auf eine Maulkupplung mit Anfahrschutzblech und Videokamera.

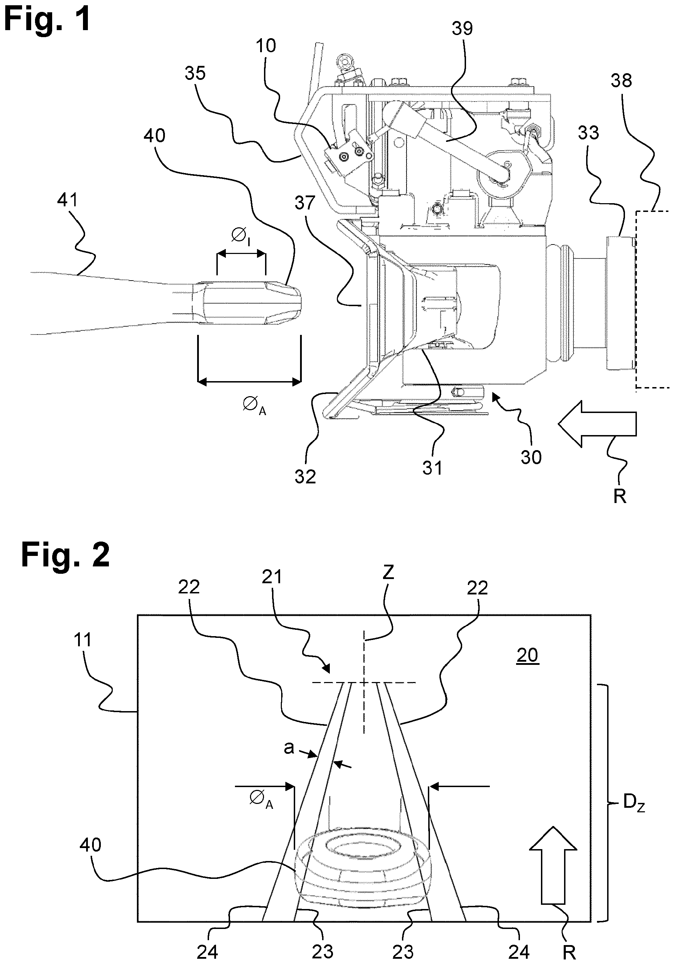

Die Fig. 1 zeigt in einer Seitenansicht eine Maulkupplung 30 und eine daran befestigte Videokamera 10. Die Videokamera 10 und die in Fig. 2 dargestellte Anzeigevorrichtung 11 sind Bestandteil des Fahrerassistenzsystems. Sinnvollerweise ist die Anzeigevorrichtung 11 in einem Fahrerhaus eines nicht gezeigten Zugfahrzeugs angeordnet und befindet sich dadurch im Sichtbereich des Fahrers.

Die Maulkupplung 30 umfasst ein nach hinten offenes Fangmaul 31 und einen Verbindungsflansch 33 zur ortsfesten Montage der Maulkupplung 30 an dem Zugfahrzeug, insbesondere an einem Fahrzeugrahmen 38 des Zugfahrzeugs. Das Fangmaul 31 ist mit einem aufgeweiteten Wandabschnitt 32 ausgebildet, welcher eine in axialer Richtung einseitig offene Einfahröffnung 37 in Umfangsrichtung vollständig umgibt. Die Videokamera 10 ist in einer Fahrzeuglängsachse Z (siehe Fig. 2) über dem Fangmaul 31 angebracht.

In der Darstellung der Fig. 1 steht eine endseitig an einer Deichsel 41 angebrachte Zugöse 40 in korrekter Ausrichtung unmittelbar vor der Einfahröffnung 37. Mit Hilfe der Deichsel 41 und der Zugöse 40 ist ein nicht weiter gezeigter Anhänger lösbar an dem Zugfahrzeug befestigt. Die Zugöse 40 gelangt bei Rückwärtsfahrt R des Zugfahrzeugs über die Einfahröffnung 37 in die Maulkupplung 30 und wird nach Erreichen ihrer Endlage dort mittels eines Kupplungsbolzens 34 schwenkbar in der Maulkupplung 30 gehalten.

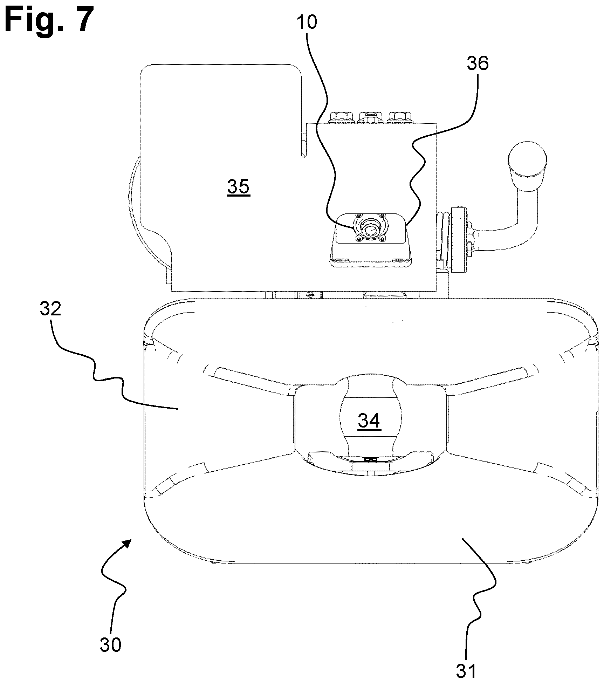

Vor dem Ankuppeln des Anhängers befindet sich der Kupplungsbolzen 34 in einer Öffnungsposition, die mittels eines Betätigungshebels 39 herbeiführbar ist. Durch ein Kontaktieren der Maulkupplung 30 mit der Zugöse 40 schnellt der Kupplungsbolzen 34 federvorgespannt in der Bildebene nach unten in seine Verschlussstellung und durchdringt einen Innendurchmesser ∅_{I} der Zugöse 40 vollständig. Der Kupplungsbolzen 34 verläuft in seiner Verschlussstellung vertikal durch das Fangmaul 31 der Maulkupplung 30, was besonders gut in der Darstellung der Fig. 7 zu erkennen ist, und stützt sich an gegenüberliegenden Seiten des Fangmauls 31 ab.

Der aufgeweitete Wandabschnitt 32 des Fangmauls 31 erleichtert die Aufnahme einer nicht korrekt zu der Zugöse 40 ausgerichteten Maulkupplung 30 und erweitert somit den Toleranzspielraum des Fangmauls 31. Der Toleranzspielraum definiert einen Bereich, innerhalb dessen bei Rückwärtsfahrt R des Zugfahrzeugs noch eine in vertikaler Höhe oder seitlich versetzt zu der Maulkupplung 30 ausgerichtete Zugöse 40 durch Kontaktierung mit dem aufgeweiteten Wandabschnitt 32 in die Einfahröffnung 37 rutscht.

Das in Fig. 1 veranschaulichte Szenario stellt sich dem Fahrer auf der Anzeigevorrichtung 11 in einem von der Videokamera 10 übertragenden Videobild 20 entsprechend Fig. 2 dar. In dem Videobild 20 sind der rückwärtige Bereich hinter dem Zugfahrzeug und die Zugöse 40 des anzukuppelnden Anhängers abgebildet. Die Maulkupplung 30 ist in dem Videobild 20 nicht abgebildet, da sie sich außerhalb eines von der Videokamera 10 erfassten Bereiches befindet.

Für eine Abschätzung der Relativlage der Zugöse 40 zu dem Zugfahrzeug ist auf der Anzeigevorrichtung 11 eine Leitmarkierung 21 in Form von zwei in rückwärtiger Richtung zulaufenden Strahlenkorridoren 22 dargestellt. Die beiden Strahlenkorridore 22 sind zueinander symmetrisch zur Fahrzeuglängsachse Z ausgerichtet, wobei jeweils einer der Strahlenkorridore 22 auf einer Seite der Fahrzeuglängsachse Z angeordnet ist. Jeder Strahlenkorridor 22 weist eine dem anderen Strahlenkorridor 22 zugewandte Innenbegrenzungslinie 23 sowie eine dem anderen Strahlenkorridor 22 abgewandte Außenbegrenzungslinie 24 auf. Die Innenbegrenzungslinie 23 ist zur Außenbegrenzungslinie 24 im senkrecht darauf stehenden Abstand a beabstandet. Der Abstand a nimmt mit zunehmender Distanz Dz zu der Videokamera 10 in der Fahrzeuglängsachse Z ab.

Die Ausrichtung der Strahlenkorridore 22 und der Abstand a sind als Bezugselement des Anhängers auf die bekannte, in der Regel genormte Größe, der Zugöse 40 abgestimmt, im vorliegenden Fall auf ihren Außendurchmesser ∅_{A}, da dieser besser im Videobild 20 erkennbar ist als der Innendurchmesser ∅_{I}. Prinzipiell könnte jedoch auch der Innendurchmesser ∅_{I} oder ein anderes ortsfest am Anhänger angeordnetes Bezugselement herangezogen und gegebenenfalls mit einem Offset zur Position der Zugöse 40 beaufschlagt werden.

Die Strahlenkorridore 22 visualisieren dem Fahrer während der Rückwärtsfahrt R eine korrekte Ausrichtung der Maulkupplung 30 zu der Zugöse 40, solange das Bezugselement beispielsweise des Außendurchmessers ∅_{A} der Zugöse 40 beide Strahlenkorridore 22 derart überdeckt, dass in jedem Strahlenkorridor 22 ein Abschnitt des Außendurchmessers ∅_{A} zwischen der Innenbegrenzungslinie 23 und der Außenbegrenzungslinie 24 angeordnet ist. Der Fahrer rangiert in Rückwärtsfahrt R das Zugfahrzeug derart, dass in beiden Strahlenkorridoren 22 ein Abschnitt des Außendurchmessers ∅_{A} zwischen der Innenbegrenzungslinie 23 und der Außenbegrenzungslinie 24 gehalten wird. Mit fortschreitender Annäherung des Zugfahrzeugs an den stehenden Anhänger in der Fahrzeuglängsachse Z vergrößert sich die Abbildung der Zugöse 40 und damit auch deren Außendurchmesser ∅_{A} im Videobild 20 in gleicher Weise wie die Größe der Strahlenkorridore 22. Verlässt die Zugöse 40 den unteren Bildrand des Videobilds 20, kann der Fahrer abschätzen, dass eine Kontaktierung des Fangmauls 31 mit der Zugöse 40 unmittelbar bevorsteht.

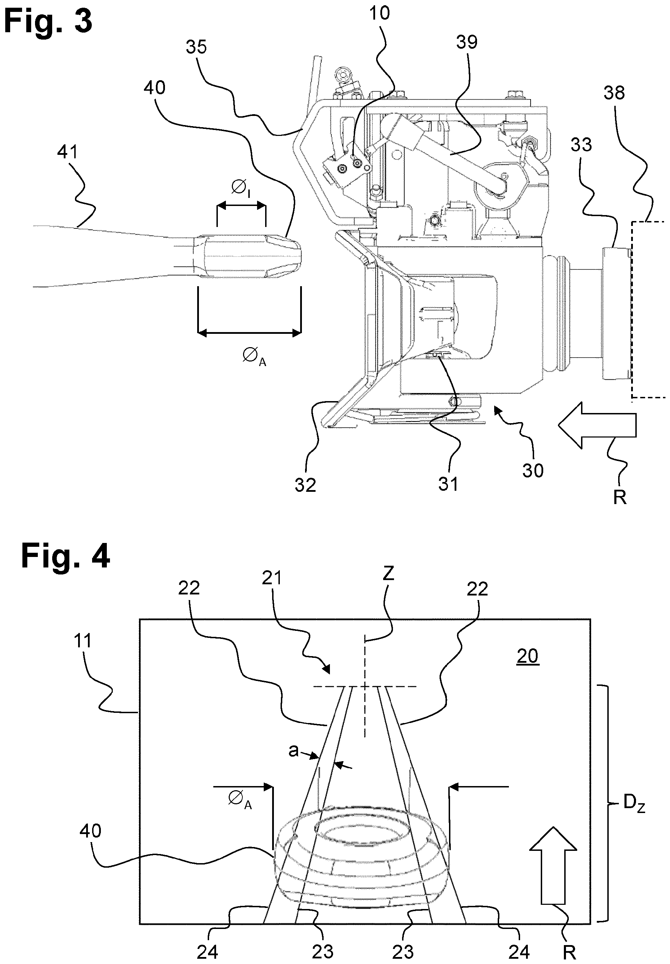

In Fig. 3 bis Fig. 6 sind Situationen illustriert, in denen das Zugfahrzeug zwar in der Fahrzeuglängsachse Z mittig vor der Zugöse 40 steht, aber die Höheneinstellung der Luftfederung falsch eingestellt ist und bei weiterer Annäherung des Zugfahrzeugs die Zugöse 40 über das Fangmaul 31 hinwegfährt oder unter dem Fangmaul 31 hindurchfährt und mithin schwere Beschädigungen am Zugfahrzeug verursachen würde.

Die Fig. 3 zeigt in einer Seitenansicht eine zu niedrige, vertikale Position der Maulkupplung 30. Für ein korrektes Einfahren der Zugöse 40 in das Fangmaul 31 müsste mittels der Luftfederung das Zugfahrzeug angehoben werden.

Die Zugöse 40 befindet sich verhältnismäßig nah an der Videokamera 10, so dass in dem Videobild 20 der Fig. 4 die Zugöse 40 größer als die statischen, stets gleichgroßen Strahlenkorridore 22 abgebildet ist. Der Außendurchmesser ∅_{A} überragt sowohl die Innenbegrenzungslinie 23 als auch die Außenbegrenzungslinie 24 von beiden Strahlenkorridoren 22. Für ein Fortsetzen des Ankuppelns müsste das Zugfahrzeug mittels seiner Luftfederung solange angehoben werden, bis ein größerer vertikaler Abstand zwischen Videokamera 10 und Zugöse 40 hergestellt ist und in dem Videobild 20 der Außendurchmesser ∅_{A} bei beiden Strahlenkorridoren 22 zwischen die Innenbegrenzungslinie 23 und die Außenbegrenzungslinie 24 gewandert ist.

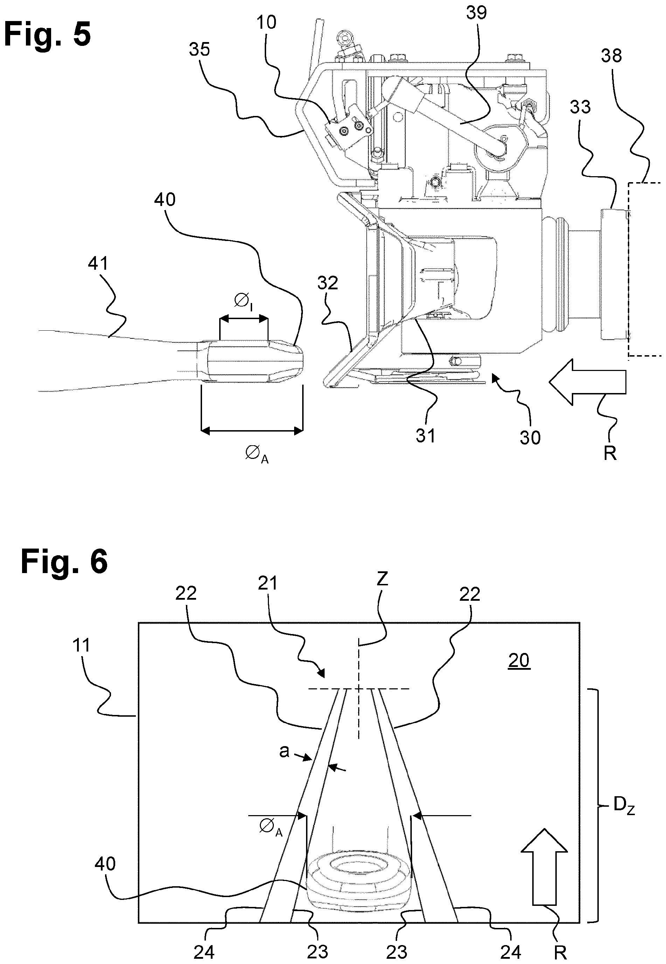

Die Fig. 5 zeigt in einer Seitenansicht eine zu hohe, vertikale Position der Maulkupplung 30. Für ein korrektes Einfahren der Zugöse 40 in das Fangmaul 31 müsste mittels der Luftfederung das Zugfahrzeug abgesenkt werden.

Die Zugöse 40 befindet sich in einer verhältnismäßig weit entfernten Position zu der Videokamera 10, so dass in dem Videobild 20 der Fig. 6 die Zugöse 40 kleiner als die statischen, stets gleichgroßen Strahlenkorridore 22 abgebildet ist. Der Außendurchmesser ∅_{A} ist zwischen den Strahlenkorridoren 22 angeordnet und reicht gerade bis an die Innenbegrenzungslinien 23 heran. Für ein Fortsetzen des Ankuppelns müsste das Zugfahrzeug mittels seiner Luftfederung solange abgesenkt werden, bis ein kleinerer vertikaler Abstand zwischen Videokamera 10 und Zugöse 40 hergestellt ist und in dem Videobild 20 der Außendurchmesser ∅_{A} zwischen die Innenbegrenzungslinie 23 und die Außenbegrenzungslinie 24 von beiden Strahlenkorridoren 22 gewandert ist.

Die Fig. 7 zeigt eine Maulkupplung 30 in einer Vorderansicht. Vertikal über dem Fangmaul 31 schließt sich ein Anfahrschutzblech 35 an, welches Teile der Verschlussmechanik und insbesondere des Betätigungshebels 39 in der Fahrzeuglängsachse Z von hinten überdeckt, um während des Ankuppelns Beschädigungen durch die Zugöse 40 des Anhängers bei einer zu niedrig eingestellten Maulkupplung 30 zu vermeiden. In der Fahrzeuglängsachse Z überragt das Anfahrschutzblech 35 den aufgeweiteten Wandabschnitt 32 nach hinten, so dass die Videokamera 10 im Wesentlichen über dem freien Ende des aufgeweiteten Wandabschnittes 32 positioniert ist.

In der Fahrzeuglängsachse Z ist in dem Anfahrschutzblech 35 ein Durchbruch 36 ausgebildet, hinter dem die Videokamera 10 ausgerichtet ist. Der Durchbruch 36 ist derart dimensioniert und die Videokamera 10 derart zu dem Durchbruch 36 beabstandet, dass der bekannte Außendurchmesser ∅_{A} der Zugöse 40 nicht soweit in den Durchbruch 36 eintauchen kann, dass die Videokamera 10 kontaktiert und beschädigt wird, selbst wenn die Zugöse 40 mit großer Wucht gegen das Anfahrschutzblech 35 prallt.

### Bezugszeichenliste

- 10: Videokamera
- 11: Anzeigevorrichtung

- 20: Videobild
- 21: Leitmarkierung
- 22: Strahlenkorridore
- 23: Innenbegrenzungslinie Strahlenkorridor
- 24: Außenbegrenzungslinie Strahlenkorridor

- 30: Kupplung/Maulkupplung
- 31: Fangmaul
- 32: aufgeweiteter Wandabschnitt
- 33: Verbindungsflansch
- 34: Kupplungsbolzen
- 35: Anfahrschutzblech
- 36: Durchbruch Anfahrschutzblech
- 37: Einfahröffnung
- 38: Fahrzeugrahmen Zugfahrzeug
- 39: Betätigungshebel

- 40: Zugöse
- 41: Deichsel

- a: Abstand Innen-/Außenbegrenzungslinie
- Dz: Distanz in Fahrzeuglängsachse
- R: Rückwärtsfahrt Zugfahrzeug
- Z: Fahrzeuglängsachse

- ∅_{A}: Außendurchmesser Zugöse
- ∅_{I}: Innendurchmesser Zugöse

## Patentansprüche

1. Fahrerassistenzsystem zum Ankuppeln eines Anhängers an ein Zugfahrzeug, aufweisend eine an dem Zugfahrzeug angebrachte Videokamera (10) und eine damit verbundene, im Sichtbereich des Fahrers angeordnete Anzeigevorrichtung (11), in dessen Videobild (20) eine statische Leitmarkierung (21) eingeblendet ist, längs derer ein an dem Zugfahrzeug angeordnetes Fangmaul (31) einer Kupplung (30) mit einer an dem Anhänger von einer Deichsel (41) gehaltenen Zugöse (40) kontaktierbar ist, wobei die Videokamera (10) vertikal beabstandet zu der Kupplung (30) angeordnet und die Leitmarkierung (21) mittels zweier beidseitig der Fahrzeuglängsachse (Z) angeordneter und in rückwärtiger Richtung des Zugfahrzeugs zulaufender Strahlenkorridore (22) gebildet ist,
**dadurch gekennzeichnet,**
**dass** die Strahlenkorridore (22) jeweils eine Innenbegrenzungslinie (23) sowie eine Außenbegrenzungslinie (24) aufweisen und für ein korrektes Ankuppeln während einer Annäherung von Fangmaul (31) und Zugöse (40) ein Bezugselement der Zugöse (40) im Videobild (20) zwischen der Innenbegrenzungslinie (23) und der Außenbegrenzungslinie (24) beider Strahlenkorridore (22) angeordnet ist.

2. Fahrerassistenzsystem nach Anspruch 1, **dadurch gekennzeichnet, dass** das Bezugselement ein Außendurchmesser (∅_{A}) der Zugöse (40) ist.

3. Fahrerassistenzsystem nach Anspruch 1 oder 2, **dadurch gekennzeichnet, dass** ein Abstand (a) zwischen der Innenbegrenzungslinie (23) und der Außenbegrenzungslinie (24) eines Strahlenkorridors (22) abhängig von einem Toleranzspielraum des Fangmauls (31) und/oder der Zugöse (40) ist.

4. Fahrerassistenzsystem nach Anspruch 3, **dadurch gekennzeichnet, dass** der Abstand (a) mit zunehmender Distanz (Dz) geringer ist.

5. Fahrerassistenzsystem nach einem der Ansprüche 1 bis 4, **dadurch gekennzeichnet, dass** die Videokamera (10) in der Fahrzeuglängsachse (Z) angeordnet ist.

6. Fahrerassistenzsystem nach einem der Ansprüche 1 bis 5, **dadurch gekennzeichnet, dass** das Fangmaul (31) einen konisch aufgeweiteten Wandabschnitt (32) aufweist und die Videokamera (10) über dem konisch aufgeweiteten Wandabschnitt (32) angeordnet ist.

7. Fahrerassistenzsystem nach einem der Ansprüche 1 bis 6, **dadurch gekennzeichnet, dass** die Kupplung (30) einen Verbindungsflansch (33) zur Montage an dem Zugfahrzeug und einen vertikal in dem Fangmaul (31) gelagerten Kupplungsbolzen (34) umfasst, wobei die Videokamera (10) in der Fahrzeuglängsachse (Z) auf der zum Verbindungsflansch (33) abgewandten Seite des Kupplungsbolzens (34) angeordnet ist.

8. Fahrerassistenzsystem nach einem der Ansprüche 1 bis 7, **dadurch gekennzeichnet, dass** die Kupplung (30) ein über dem Fangmaul (31) angeordnetes Anfahrschutzblech (35) aufweist und die Videokamera (10) hinter dem Anfahrschutzblech (35) befestigt ist.

9. Fahrerassistenzsystem nach Anspruch 8, **dadurch gekennzeichnet, dass** das Anfahrschutzblech (35) mit einem Durchbruch (36) ausgebildet ist und die Videokamera (10) fluchtend zu dem Durchbruch (36) angeordnet ist.

10. Fahrerassistenzsystem nach einem der Ansprüche 1 bis 9, **dadurch gekennzeichnet, dass** das Fahrerassistenzsystem automatisch oder auf Fahrerfreigabe in die Motorsteuerung und/oder Getriebesteuerung und/oder Bremssteuerung und/oder Höhensteuerung der Luftfederung Einfluss nimmt.

11. Verfahren zum Ankuppeln eines Anhängers an ein Zugfahrzeug, aufweisend eine an dem Zugfahrzeug angebrachte Videokamera (10) und eine damit verbundene, im Sichtbereich des Fahrers angeordnete Anzeigevorrichtung (11), in dessen Videobild (20) eine statische Leitmarkierung (21) eingeblendet wird, längs derer ein an dem Zugfahrzeug angeordnetes Fangmaul (31) einer Kupplung (30) mit einer an dem Anhänger von einer Deichsel (41) gehaltenen Zugöse (40) kontaktiert wird, wobei die Videokamera (10) vertikal beabstandet zu der Kupplung (30) angeordnet ist und die Leitmarkierung (21) mittels zweier symmetrisch zur Fahrzeuglängsachse (Z) angeordneter und in rückwärtiger Richtung des Zugfahrzeugs zulaufender Strahlenkorridore (22) visualisiert wird,
**dadurch gekennzeichnet,**
**dass** die Strahlenkorridore (22) jeweils eine Innenbegrenzungslinie (23) sowie eine Außenbegrenzungslinie (24) aufweisen und während einer Annäherung von Fangmaul (31) und Zugöse (40) korrekt angekuppelt wird, wenn ein Bezugselement der Zugöse (40) im Videobild (20) zwischen der Innenbegrenzungslinie (23) und der Außenbegrenzungslinie (24) beider Strahlenkorridore (22) angeordnet wird.

12. Verfahren nach Anspruch 11, **dadurch gekennzeichnet, dass** durch eine im Videobild (20) über beide Außenbegrenzungslinien (24) hinausragende Zugöse (40) visualisiert wird, das Zugfahrzeug mittels seiner Luftfederung anzuheben.

13. Verfahren nach Anspruch 11 oder 12, **dadurch gekennzeichnet, dass** durch eine im Videobild (20) innerhalb beider Innenbegrenzungslinien (23) angeordneten Zugöse (40) visualisiert wird, das Zugfahrzeug mittels seiner Luftfederung abzusenken.

## Claims

1. A driver assistance system for coupling a trailer onto a tractor, having a video camera (10) attached to the tractor and an associated display (11) arranged in the driver's field of vision, in the video image (20) of which system a static guide marking (21) is displayed along which a coupling mouth (31) of a coupling (30) arranged on the tractor can be contacted with a drawbar eye (40) held on the trailer by a drawbar (41), wherein the video camera (10) is arranged at a vertical distance from the coupling (30) and the guide marking (21) is formed by two beam corridors (22) arranged on both sides of the vehicle's longitudinal axis (Z) converging towards one another in the rearward direction of the tractor,
**characterised in that,**
the beam corridors (22) each have an inner boundary line (23) and an outer boundary line (24) and, for a correct coupling, a reference element of the drawbar eye (40) is arranged in the video image (20) between the inner boundary line (23) and the outer boundary line (24) of both beam corridors (22) during the approach of the coupling mouth (31) and the drawbar eye (40).

2. The driver assistance system according to claim 1, **characterised in that** the reference element is an outer diameter (∅_{A}) of the drawbar eye (40).

3. The driver assistance system according to claim 1 or 2, **characterised in that** a distance (a) between the inner boundary line (23) and the outer boundary line (24) of a beam corridor (22) depends on a tolerance range of the coupling mouth (31) and/or the drawbar eye (40).

4. The driver assistance system according to claim 3, **characterised in** the distance (a) is smaller with increasing distance (D_{z}).

5. The driver assistance system according to any one of claims 1 to 4, **characterised in that** the video camera (10) is arranged in the vehicle longitudinal axis (Z).

6. The driver assistance system according to any one of claims 1 to 5, **characterised in that** the coupling mouth (31) has a conically expanded wall section (32) and the video camera (10) is arranged above the conically expanded wall section (32).

7. The driver assistance system according to any one of claims 1 to 6, **characterised in that** the coupling (30) comprises a connecting flange (33) for mounting on the tractor and a coupling bolt (34) mounted vertically in the coupling mouth (31), wherein the video camera (10) is arranged in the vehicle longitudinal axis (Z) on the side of the coupling bolt (34) facing away from the connecting flange (33).

8. The driver assistance system according to any one of claims 1 to 7, **characterised in that** the coupling (30) has a collision protection plate (35) arranged above the coupling mouth (31) and the video camera (10) is attached behind the collision protection plate (35).

9. The driver assistance system according to claim 8, **characterised in that** the collision protection plate (35) is formed with an opening (36) and the video camera (10) is arranged in alignment with the opening (36).

10. The driver assistance system according to any one of claims 1 to 9, **characterised in that** the driver assistance system exerts influence automatically or upon driver release on the engine control and/or transmission control and/or brake control and/or height control of the air suspension.

11. A method for coupling a trailer onto a tractor, having a video camera (10) attached to the tractor and an associated display (11) arranged in the driver's field of vision, in the video image (20) of which system a static guide marking (21) is displayed along which a coupling mouth (31) of a coupling (30) arranged on the tractor is contacted with a drawbar eye (40) held on the trailer by a drawbar (41), wherein the video camera (10) is arranged at a vertical distance from the coupling (30) and the guide marking (21) is visualised by two beam corridors (22) arranged symmetrically with respect to the vehicle's longitudinal axis (Z) converging towards one another in the rearward direction of the tractor,
**characterised in that,**
the beam corridors (22) each have an inner boundary line (23) and an outer boundary line (24) and are correctly coupled during the approach of the coupling mouth (31) and the drawbar eye (40) when a reference element of the drawbar eye (40) is arranged in the video image (20) between the inner boundary line (23) and the outer boundary line (24) of both beam corridors (22).

12. The method according to claim 11, **characterised in that** a drawbar eye (40) projecting over the two outer boundary lines (24) in the video image (20) visualises to lift the tractor by its air suspension.

13. The method according to claim 11 or 12, **characterised in that** a drawbar eye (40) arranged in the video image (20) within the two inner boundary lines (23) visualizes to lower the tractor by its air suspension.

## Revendications

1. Système d'aide à la conduite d'accouplement d'une remorque à un véhicule tracté, comportant une caméra vidéo (10) fixée au véhicule tracté et un dispositif d'affichage (11) relié à celle-ci, disposé dans le champ de vision du conducteur, dans l'image vidéo (20) duquel est inséré un repère de guidage (21) statique, le long duquel un dispositif d'attache (31) d'un accouplement (30) disposé sur le véhicule tracté peut être mis en contact avec un anneau de remorquage (40) maintenu sur la remorque par un timon (41), dans lequel la caméra vidéo (10) est disposée à une distance verticale de l'accouplement (30) et le repère de guidage (21) est formé au moyen de deux couloirs de faisceau (22) disposés de part et d'autre de l'axe longitudinal du véhicule (Z) et convergeant vers l'arrière du véhicule tracté, **caractérisé en ce que,**
les couloirs de faisceau (22) présentent chacun une ligne de délimitation intérieure (23) et une ligne de délimitation extérieure (24) et, pour un accouplement correct pendant un rapprochement du dispositif d'attache (31) et de l'anneau de remorquage (40), un élément de référence de l'anneau de remorquage (40) est disposé dans l'image vidéo (20) entre la ligne de délimitation intérieure (23) et la ligne de délimitation extérieure (24) des deux couloirs de faisceaux (22).

2. Système d'aide à la conduite selon la revendication 1, **caractérisé en ce que** l'élément de référence est un diamètre extérieur (∅_{A}) de l'anneau de remorquage (40).

3. Système d'aide à la conduite selon la revendication 1 ou 2, **caractérisé en ce qu'**une distance (a) entre la ligne de délimitation intérieure (23) et la ligne de délimitation extérieure (24) d'un couloir de faisceau (22) dépend d'une plage de tolérance du dispositif d'attache (31) et/ou de l'anneau de remorquage (40).

4. Système d'aide à la conduite selon la revendication 3, **caractérisé en ce que** la distance (a) diminue lorsque la distance (Dz) augmente.

5. Système d'aide à la conduite selon l'une des revendications 1 à 4, **caractérisé en ce que** la caméra vidéo (10) est disposée dans l'axe longitudinal du véhicule (Z).

6. Système d'aide à la conduite selon l'une des revendications 1 à 5, **caractérisé en ce que** le dispositif d'attache (31) présente une section de paroi conique élargie (32) et la caméra vidéo (10) est disposée au-dessus de la section de paroi conique élargie (32).

7. Système d'aide à la conduite selon l'une des revendications 1 à 6, **caractérisé en ce que** l'accouplement (30) comprend une bride de liaison (33) pour être montée sur le véhicule tracté et une tige de remorquage (34) montée verticalement dans le dispositif d'attache (31), dans lequel la caméra vidéo (10) est disposée dans l'axe longitudinal du véhicule (Z) sur le côté de la tige de remorquage (34) opposée à la bride de liaison (33).

8. Système d'aide à la conduite selon l'une des revendications 1 à 7, **caractérisé en ce que** l'accouplement (30) comporte une plaque de protection (35) disposée au-dessus du dispositif d'attache (31) et la caméra vidéo (10) est fixée derrière la plaque de protection (35).

9. Système d'aide à la conduite selon la revendication 8, **caractérisé en ce que** la plaque de protection (35) est conçue avec une ouverture (36) et la caméra vidéo (10) est disposée en alignement avec l'ouverture (36).

10. Système d'aide à la conduite selon l'une des revendications 1 à 9, **caractérisé en ce que** le système d'aide à la conduite agit sur la commande du moteur et/ou la commande de la transmission et/ou la commande du frein et/ou la régulation de la hauteur de la suspension pneumatique automatiquement ou après accord du conducteur.

11. Procédé d'accouplement d'une remorque à un véhicule tracté, comportant une caméra vidéo (10) fixée au véhicule tracté et un dispositif d'affichage (11) relié à celle-ci, disposé dans le champ de vision du conducteur, dans l'image vidéo (20) duquel est inséré un repère de guidage (21) statique, le long duquel un dispositif d'attache (31) d'un accouplement (30) disposé sur le véhicule tracté peut être mis en contact avec un anneau de remorquage (40) maintenu sur la remorque par un timon (41), dans lequel la caméra vidéo (10) est disposée à une distance verticale de l'accouplement (30) et le repère de guidage (21) est visualisé au moyen de deux couloirs de faisceau (22) symétriques à l'axe longitudinal du véhicule (Z) et convergeant vers l'arrière du véhicule tracté,
**caractérisé en ce que,**
les couloirs de faisceau (22) présentent chacun une ligne de délimitation intérieure (23) et une ligne de délimitation extérieure (24) et, pendant un rapprochement du dispositif d'attache (31) et de l'anneau de remorquage (40), le remorquage est effectué correctement lorsqu'un élément de référence de l'anneau d'attelage (40) est disposé dans l'image vidéo (20) entre la ligne de délimitation intérieure (23) et la ligne de délimitation extérieure (24) des deux couloirs de faisceaux (22).

12. Procédé selon la revendication 11, **caractérisé en ce qu'**un anneau de remorquage (40) dépassant des deux lignes de délimitation extérieures (24) dans l'image vidéo (20) visualise le soulèvement du véhicule tracté au moyen de sa suspension pneumatique.

13. Procédé selon la revendication 11 ou 12, **caractérisé en ce qu'**un anneau de remorquage (40) disposé dans l'image vidéo (20) à l'intérieur des deux lignes de délimitation intérieures (23) visualise l'abaissement du véhicule tracté au moyen de sa suspension pneumatique.
